# EUROPÄISCHE PATENTANMELDUNG

(11) **EP 2 165 587 A1**
(43) Veröffentlichungstag der Anmeldung: **24.03.2010**
(21) Anmeldenummer: 09010360.7
(22) Anmeldetag: 12.08.2009
(51) Int. Cl.: A01C 15/00

(54) **Befestigung Anordnung für einen Schutz- oder ein Gittersieb**

(30) Priorität: 20.08.2008 DE 102008038539
(71) Anmelder: Amazonen-Werke H. Dreyer GmbH & Co. KG, 49205 Hasbergen (DE)
(72) Erfinder: Brüggemann, Klaus, 27777 Ganderkesee (DE); Wilken, Martin, 26409 Wittmund (DE)

(57) **Zusammenfassung**

Befestigungsanordnung für ein Schutz- und/oder Siebgitter in Behältern landwirtschaftlicher Maschinen, insbesondere Verteilmaschinen, wobei das Gitter oberhalb einer am Behälter angeordneten, angetriebenen Vorrichtung, wie Förder-, Verteil-, Dosier- und/oder Rühreinrichtung an der Behälterwand mittels Schrauben befestigt ist. Um eine Sicherheitsnorm entsprechende einfache Befestigungsanordnung für ein Schutz- oder Siebgitter in Behältern landwirtschaftlicher Maschinen, insbesondere Verteilmaschinen zu schaffen, ist vorgesehen, dass die Schrauben als Rundkopfschrauben mit Vierkantansatz nach DIN 603 ausgebildet sind, dass die Schrauben jeweils mit der ihr zugeordneten Mutter unterhalb des Gitters angeordnet sind.

## Beschreibung

Die Erfindung betrifft eine Befestigungsanordnung für ein Schutz- und/oder Siebgitter gemäß des Oberbegriffes des Patentanspruches 1.

Derartige Befestigungsanordnungen sind in vielfältiger Weise bekannt. Durch die DE 103 48 067 A1 ist eine Befestigungsanordnung für ein Schutz- oder Siebgitter in Behältern landwirtschaftlicher Maschinen bekannt. Hierbei ist diese Befestigungsanordnung so ausgelegt, dass auf der einen Seite das Gitter mittels einer Gelenkanordnung am Behälter befestigt ist und so um die Gelenkachse diese Gelenke aufgeklappt werden. Auf der gegenüberliegenden Seite ist zwischen dem Gitter und der Behälterwand ein als eine Einrastnase mit einem Rastanschlag zusammenwirkendes Verriegelungselement angeordnet. Diese Ausgestaltung der Befestigungsanordnung ist insbesondere für großflächige Schutz- oder Siebgitter, die den Vorratsbehälter relativ weit oben abdecken, vorteilhaft.

Insbesondere wenn nur kleine flächige Schutzgitter Verwendung finden, die in einem geringen Abstand oberhalb angetriebener Vorrichtungen angeordnet sind, ist diese Befestigungsanordnung sehr aufwendig.

Schutz- und Siebgitter müssen in Behältern oberhalb angetriebener Vorrichtung angeordnet sein, damit die in den Verkehr gebrachten landwirtschaftlichen Maschinen die gültigen Sicherheitsnormen erfüllen.

Der Erfindung liegt die Aufgabe zugrunde, eine der Sicherheitsnorm entsprechende, jedoch einfach ausgestaltete Befestigungsanordnung für ein Schutz- oder Siebgitter in Behältern landwirtschaftlicher Maschinen, insbesondere Verteilmaschinen zu schaffen.

Diese Aufgabe wird erfindungsgemäß dadurch gelöst, dass die Schrauben als Rundkopfschrauben mit Vierkantansatz nach DIN 603 ausgebildet sind, dass die Schrauben jeweils mit der ihr zugeordneten Mutter unterhalb des Gitters angeordnet sind.

Infolge dieser Maßnahmen lässt sich mit einfachsten Mitteln eine den gültigen Sicherheitsnorm entsprechende Anordnung eines Schutz- und Siebgitters in Behältern landwirtschaftlicher Maschinen verwirklichen. Durch die erfindungsgemäßen Maßnahmen werden die lösbare Mittel der Befestigungsvorrichtung unterhalb des Gitters angeordnet, so dass die Befestigungsanordnung nicht von der zugänglichen Seite des Vorratsbehälters ohne Zerstörung des Gitters gelöst werden kann. Infolge der erfindungsgemäßen Ausgestaltung dieser Befestigungsanordnung wird das Gitter vor der Montage der angetriebenen Vorrichtung an dem Vorratsbehälter durch die Behälteröffnung, die zu der angetriebenen Vorrichtung führt, montiert.

Damit man nicht an die unter dem Gitter angeordnete Mutter der Schraube gelangen kann, ist vorgesehen, dass die Mutter der Schraube sich jeweils zumindest annähernd senkrecht unterhalb einer Strebe des Gitters befindet.

Eine besonders sichere Anordnung der Mutter der Schraube der Befestigungsvorrichtung wird dadurch erreicht, dass die Mutter der Schraube sich zumindest annähernd senkrecht unter einer Strebenkreuzung des Gitters befindet.

Um in einfacher Weise die Rundkopfschraube mit der Mutter als sicherheitsnormgerechte Befestigung zur Befestigung des Schutz- und Siebgitters in dem Behälter in einfacher Weise ausgestalten zu können, ist vorgesehen, dass das Gitter nach unten abgebogene Befestigungslaschen mit zumindest einer Aussparung aufweist, dass die Befestigungslasche jeweils mit einer Schraube zusammenwirkt.

Damit die Befestigungsanordnung in erfindungsgemäßer Weise und sicherheitsnormengerecht in einfacher Weise in dem Behälter zu befestigen ist, ist vorgesehen, dass die Vorrichtung, wie Förder-, Verteil-, Dosier- und/oder Rühreinrichtung mittels Befestigungselementen an dem Behälter in montierbarerer Weise angeordnet ist.

Eine einfache Befestigung der Vorrichtung lässt sich dadurch verwirklichen, dass die Vorrichtung, wie Förder-, Verteil-, Dosier- und/oder Auslaufeinrichtungen im Bereich der Auslauföffnung des Behälters an diesem befestigt ist.

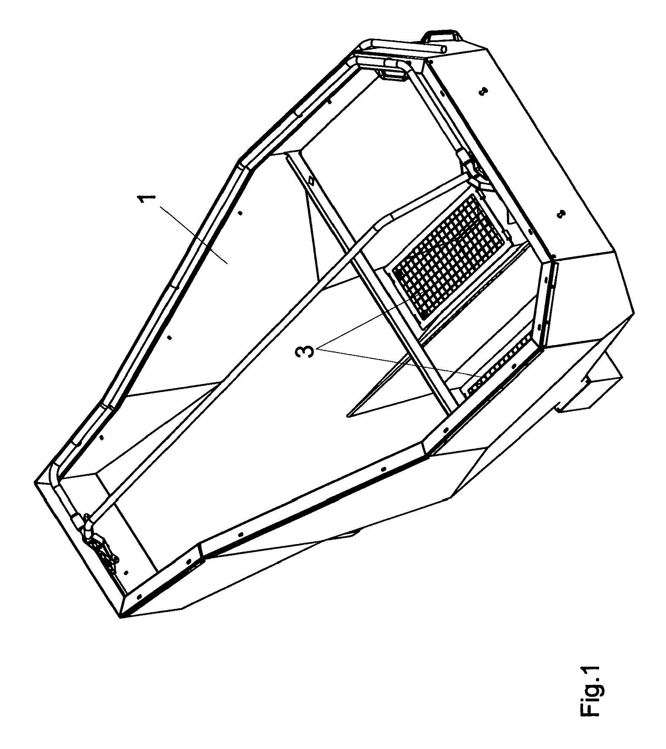

Weitere Einzelheiten der Erfindung sind der Beispielsbeschreibung und den Zeichnungen zu entnehmen. Hierbei zeigen
- Fig. 1: den Vorratsbehälter einer landwirtschaftlichen Maschine in perspektivischer Darstellung in der Ansicht schräg von oben,
- Fig. 2: das im unteren Bereich des Vorratsbehälters angeordnete Schutz- und Siebgitter im vergrößertem Maßstab, in perspektivischer Darstellung und im Teilschnitt,
- Fig. 3: die Befestigung des Gitters im Vorratsbehälter in der Ansicht III - III,
- Fig. 4: die Befestigung des Gitters im Behälter in der Ansicht von oben und in Teilansicht,
- Fig. 5: die Anordnung des Gitters im unteren Bereich des Behälters in der Ansicht III - III, ohne die Anordnung der angetriebenen Vorrichtung unterhalb des Behälters und
- Fig. 6: die Anordnung des Gitters im unteren Bereich des Behälters in der Ansicht III - III mit der Anordnung der angetriebenen Vorrichtung unterhalb des Behälters.

Der Behälter 1 der landwirtschaftlichen Maschine kann als Vorratsbehälter, Transportbehälter ect. unterschiedlicher landwirtschaftlicher Maschinen, wie Verteilmaschinen Mähdrescher etc. ausgestaltet sein.

Derartige Vorratsbehälter 1 sind zumindest in dem unteren Bereich trichterförmig ausgebildet und weisen vor der Auslauföffnung angeordnete angetriebene Vorrichtungen 2, wie Förder-, Verteil-, Dosier- oder Rühreinrichtungen auf.

Damit nicht in unbefugter Weise Zugang durch den Vorratsbehälter 1 zu der angetriebenen Vorrichtung 2 möglich ist, ist im unteren Bereich des Behälters 2 oberhalb der angetriebenen Vorrichtung 2 ein Schutz- und Siebgitter 3 angeordnet, wie die Zeichnungen zeigen. Dieses Gitter 3 ist mittels einer Befestigungsanordnung 4 an der Behälterwand 5 des Behälters 1 befestigt.

Das Gitter 3 weist nach unten abgebogene Befestigungslaschen 6 auf. In diesen Befestigungslaschen 6 ist jeweils zumindest eine Aussparung angeordnet. Ebenfalls weist die Behälterwandung 5 mehrere Aussparungen auf. In den Aussparung in der Behälterwandung 5 und der Befestigungslasche 6 ist eine Schraubverbindung 7 angeordnet. Mittels dieser Schraubverbindung 7 ist das Gitter 3 an der Behälterwand zu befestigt.

Diese Schraubverbindung 7 weist als Rundkopfschraube mit Vierkantansatz nach DIN 603 ausgebildete Schrauben 8 auf. Diese Schraube 8 ist von außen durch die Aussparungen in der Behälterwand 5 und der Befestigungslasche 6 gesteckt, so dass sich der Rundkopf 9 auf der Außenseite des Behälters 1 befindet. Auf der Innenseite des Behälters 1 ist auf dem Schraubgewinde der Rundkopfschraube 8 die Mutter 10 unterhalb des Gitters 3 angeordnet.

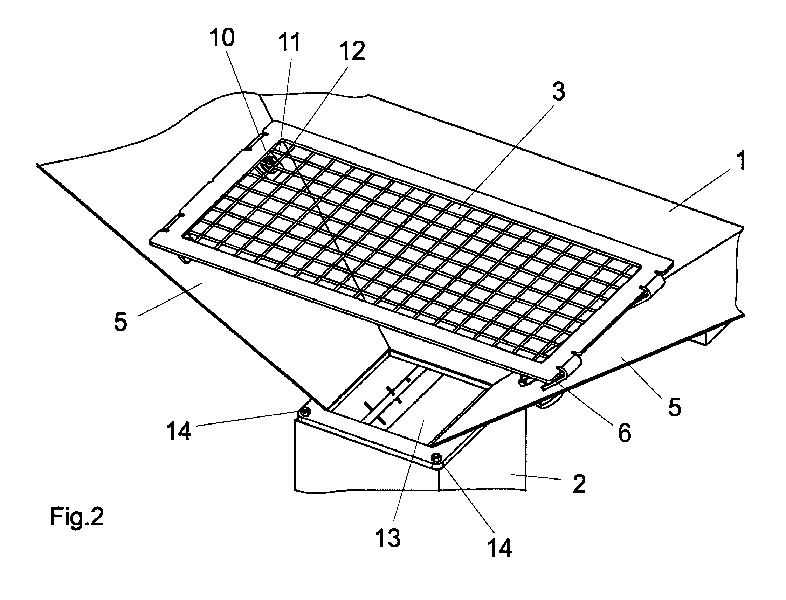

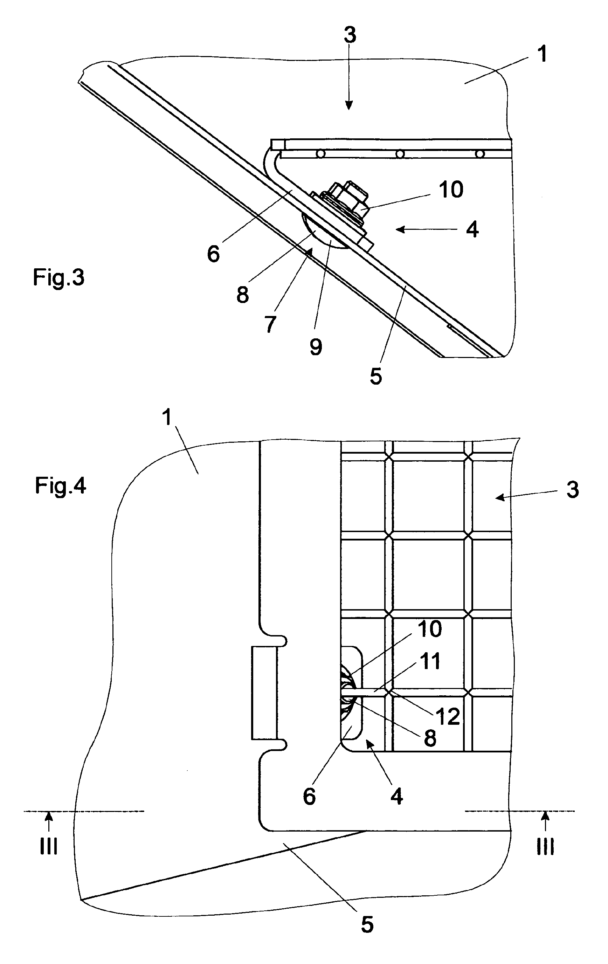

Die Mutter 10 der Schraube 8 befindet sich zumindest annähernd senkrecht unterhalb einer Strebe 11, in bevorzugter Weise zumindest annähernd senkrecht unter einer Strebenkreuzung 12 des Gitters, wie die Fig. 2 und 4 zeigen.

Durch diese Anordnung der Schraubverbindungen 7 mit der das Gitter 3 in dem Behälter 1 angeordnet ist, ist es nicht möglich die Schraubverbindung 7 von oben durch das Gitter 3 zu lösen.

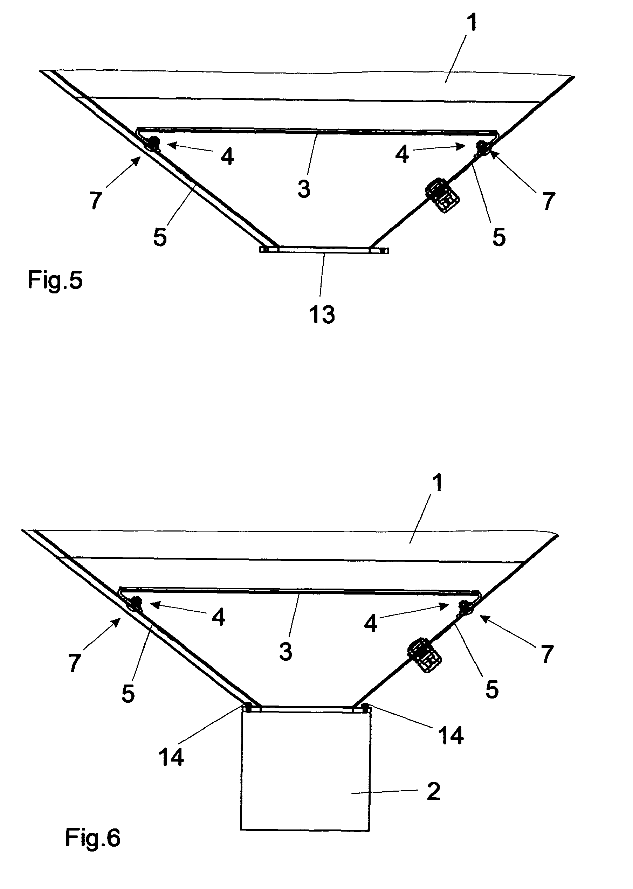

Die Montage des Gitters 3 in dem Behälter 1 erfolgt durch die untere Auslauföffnung 13 des Vorratsbehälters 1, wenn die angetriebene Vorrichtung 2, wie Förder-, Verteil-, Dosier-, und/oder Rühreinrichtungen noch nicht mittels der Befestigungselemente 14 an dem Behälter 1 angeordnet ist, wie Fig. 5 zeigt.

Durch die Auslauföffnung 13 des Behälters 1 kann dann mittels Montagemittel und von Hand die Mutter 10 auf dem Gewinde der Rundkopfschraube 8 aufgeschraubt und mittels Montagemitteln, wie Schraubenschlüsseln etc. fest angezogen werden.

Anschließend wird an dem Behälter 1 die angetriebene Vorrichtung 2 im Bereich der Auslauföffnung 13 an dem Behälter 1 befestigt.

Eine Demontage des Gitters 3 kann nur nach Demontage der angetriebenen Vorrichtung 2, die sich an die Auslaufeinrichtung im Bereich der Auslauföffnung 13 des Vorratsbehälters 1 befindet, erfolgen.

## Patentansprüche

1. Befestigungsanordnung für ein Schutz- und/oder Siebgitter in Behältern landwirtschaftlicher Maschinen, insbesondere Verteilmaschinen, wobei das Gitter oberhalb einer am Behälter angeordneten, angetriebenen Vorrichtung, wie Förder-, Verteil-, Dosier- und/oder Rühreinrichtung an der Behälterwand mittels Schrauben befestigt ist, **dadurch gekennzeichnet, dass** die Schrauben (8) als Rundkopfschrauben (9) mit Vierkantansatz nach DIN 603 ausgebildet sind, dass die Schrauben (8) jeweils mit der ihr zugeordneten Mutter (10) unterhalb des Gitters angeordnet sind.

2. Befestigungsanordnung nach Anspruch 1, **dadurch gekennzeichnet, dass** die Mutter (10) der Schraube (8) sich jeweils zumindest annähernd senkrecht unterhalb einer Strebe (11) des Gitters (3) befindet.

3. Befestigungsanordnung nach Anspruch 1, **dadurch gekennzeichnet, dass** die Mutter (10) der Schraube (8) sich zumindest annähernd senkrecht unter einer Strebenkreuzung (12) des Gitters (3) befindet.

4. Befestigungsanordnung nach einem oder mehreren der vorstehenden Ansprüche, **dadurch gekennzeichnet, dass** das Gitter (3) nach unten abgebogene Befestigungslaschen (6) mit zumindest einer Aussparung aufweist, dass die Befestigungslasche (6) jeweils mit einer Schraube (7,8,9) zusammenwirkt.

5. Befestigungsanordnung nach einem oder mehreren der vorstehenden Ansprüche, **dadurch gekennzeichnet, dass** die Vorrichtung (2), wie Förder-, Verteil-, Dosier- und/oder Rühreinrichtung mittels Befestigungselementen (14) an dem Behälter (1) in montierbarerer Weise angeordnet ist.

6. Befestigungsanordnung nach Anspruch 5, **dadurch gekennzeichnet, dass** die Vorrichtung (2), wie Förder-, Verteil-, Dosier- und/oder Auslaufeinrichtungen im Bereich der Auslauföffnung (13) des Behälters (1) an diesem befestigt ist.
